# EUROPÄISCHE PATENTSCHRIFT

(11) **EP 0 937 106 B1**
(45) Veröffentlichungstag und Bekanntmachung des Hinweises auf die Patenterteilung: **29.08.2001**
(21) Anmeldenummer: 97913166.1
(22) Anmeldetag: 21.10.1997
(51) Int. Cl.: C08F 4/48

(54) **VERFAHREN ZUR HERSTELLUNG VON POLYMERISATEN AUS VINYLMONOMEREN MIT POLAREN GRUPPEN MITTELS ANIONISCHER POLYMERISATION**
PROCESS FOR PRODUCING POLYMERS OF VINYL MONOMERS WITH POLAR GROUPS BY ANIONIC POLYMERIZATION
PROCEDE POUR LA PRODUCTION DE POLYMERES A BASE DE MONOMERES VINYLIQUES A GROUPES POLAIRES AU MOYEN DE LA POLYMERISATION ANIONIQUE

(30) Priorität: 08.11.1996 DE 19646066
(43) Veröffentlichungstag der Anmeldung: 25.08.1999
(73) Patentinhaber: BASF AKTIENGESELLSCHAFT, 67056 Ludwigshafen (DE)
(72) Erfinder: JÜNGLING, Stephan, D-68165 Mannheim (DE); GAUSEPOHL, Hermann, D-67112 Mutterstadt (DE); WEISS, Horst, D-76139 Karlsruhe (DE); BAUMGÄRTEL, Michael, D-67227 Frankenthal (DE)
(86) Internationale Anmeldenummer: EP9705796
(87) Internationale Veröffentlichungsnummer: WO9821249

(56) Entgegenhaltungen:
- EP-A- 0 002 159
- BE-A- 882 565
- DE-A- 2 723 920

## Beschreibung

Die vorliegende Erfindung betrifft ein Verfahren zur Herstellung von Polymerisaten aus Vinylmonomeren mit polaren Gruppen mittels anionischer Polymerisation.

Initiatorsysteme für die anionische Polymerisation von Acrylaten und Methacrylaten sowie Verfahren zur Herstellung von Polymerisaten aus Acrylaten und Methacrylaten mittels anionischer Polymerisation sind bekannt.

Während die anionische Polymerisation von unpolaren Vinylmonomeren, z.B. Styrol, auch unter technischen Bedingungen die Kontrolle des Molekulargewichts und der Molekulargewichtsverteilung sowie die Synthese von Blockcopolymeren erlaubt, können bei der anionischen Polymerisation von Vinylmonomeren mit polaren Gruppen Beeinträchtigungen durch Nebenreaktionen in der Regel selbst bei tiefen Temperaturen (-78°C) nicht vollständig unterdrückt werden. Unter den herkömmlichen Bedingungen der anionischen Polymerisation von beispielsweise Carbonylgruppen enthaltenden Vinylmonomeren wird u.a. Kettenabbruch durch Reaktion des reaktiven "lebenden" Kettenendes mit einer Carbonylgruppe derselben Kette ("back-biting") oder intermolekular durch Reaktion mit einer Carbonylgruppe einer anderen Kette beobachtet. Des weiteren bietet bei Acrylaten der α-Wasserstoff dem kontrollierten Polymerisationsprozeß abträgliche Angriffsmöglichkeiten. Es wird daher versucht, das Verfahren der anionischen Polymerisation durch geeignete Wahl des Kettenstarters, des Lösungsmittels bzw. Lösungsmittelsystems, der Temperatur sowie durch sorgfältiges Aufreinigen der Monomerkomponenten auf Vinylmonomere mit polaren Gruppen übertragbar zu machen. Besonderes Augenmerk gilt hierbei Additiven mit chelatisierenden Eigenschaften, die das Assoziationsverhalten der beteiligten Ionen beeinflussen.

In der EP-A 0 524 054 wird ein Initiatorsystem, bestehend aus Alkali- oder Erdalkaliorganylen und einem Alkalialkoholat, welches eine oder mehrere Ethergruppen aufweist, beschrieben. Derartige Systeme gestatten die kontrollierte anionische Polymerisation von Acrylat- und Methacrylatmonomeren zu Homo- und Blockcopolymeren. Als bevorzugtes Initiatorsystem wird das Lithiumsalz von CH₃(OCH₂CH₂)₂OH zusammen mit Diphenylmethyllithium (Ph₂CHLi) als Starterverbindung eingesetzt, wobei die Polymerisation vorteilhafterweise bei Temperaturen von -100°C bzw. -78°C durchgeführt wird. Bei -30°C erhaltene Polymerisate von z.B. 2-Ethylhexylacrylat weisen eine verbreiterte Molekulargewichtsverteilung auf.

Die EP 668 297 beschreibt Initiatorsysteme für die anionische Polymerisation von Methacrylaten bestehend aus Alkali- oder Erdalkalialkylen und Alkalialkoholaten der Formel R¹(OR²)ₘOM¹ bzw. M¹(OR²)ₘOM¹ oder nichtstickstoffhaltigen Kronenethern. Mit dem Lithiumsalz von CH₃(OCH₂CH₂)₂OH und Diphenylmethyllithium als bevorzugtem Initiatorsystem werden für die Copolymerisation von Methylmethacrylat mit t-Butylacrylat akzeptable Copolymerausbeuten und Molekulargewichtsverteilungen allerdings erst bei Temperaturen ≤ -40°C erzielt. Mit dem System Diphenylmethylnatrium/18-Krone-6 gelingt dieses nur noch bei Temperaturen ≤ -78°C.

Die DE 28 56 751 beschreibt Initiatorsysteme bestehend aus Alkaliamiden bzw. Polyamiden und Alkalialkoholaten sowie ein Verfahren zur Herstellung von Polymerisaten aus Vinylmonomeren mit polaren Gruppen mittels anionischer Polymerisation, das in Gegenwart der genannten Initiatorsysteme bei Raumtemperatur durchgeführt werden kann. Hierbei geht allerdings die der anionischen Polymerisation eigene Möglichkeit, die Eigenschaften des Polymermaterials durch das Monomer/Initiator-Verhältnis maßgeblich zu beeinflussen, durch die infolge der Initiierungsreaktion in die Polymerkette eingebauten Amine bzw. Polyamine wieder verloren. Darüber hinaus stehen die geringen Ausbeuten bzw. die unvollständigen Umsätze sowie die breiten Molekulargewichtsverteilungen einer großtechnischen Anwendung entgegen.

Nach *Varshney et al.* (Macromolecules 1992, Vol. 25, S. 4457-4463) ist die lebende anionische Polymerisation von Methylmethacrylat oder tert.-Butylacrylat in Gegenwart stabilisierend wirkender, µ-koordinierender Salze, wie Lithiumchlorid, nur bei Temperaturen unterhalb von -40°C zu realisieren. Allerdings wird die lebende anionische Polymerisation von Methylmethacrylat bei Temperaturen bis 0°C dann beobachtet, wenn ganz spezielle Kronenether, wie 1,4,7,10,13,16-Hexaoxycyclooctadecan (18K6), zum Einsatz kommen. Oberhalb von 0°C ist infolge zunehmender Nebenreaktionen eine kontrollierte Polymerisation auch mit derartigen Systemen nicht mehr möglich.

Die Offenlegungsschrift BE-A 882 565 beschreibt Initiatorsysteme für die anionische Polymerisation von konjugierten Dienen und gegebenenfalls vinylaromatischen Verbindungen, die aus den Komponenten a) Organolithiuminitiator, b) einer Barium-, Strontium-oder Calciumverbindung, c) einer organometallischen Verbindung auf der Basis der Elemente der Gruppen IIA oder IIIA des Periodensystems der Elemente und d) einem Aminoalkoholat bzw. einem Polyethylenoxidalkoholat bestehen. Mit diesen Initiatorsystemen lässt sich ein hoher Anteil an 1,4-verknüpften Dienen realisieren. Die BE-A 882 565 geht jedoch nicht ein auf die anionische Polymerisation von z.B. Acrylaten oder Methacrylaten.

Es fehlt daher noch an Verfahren zur Herstellung von Polymerisaten aus Vinylmonomeren mit polaren Gruppen mittels anionischer Polymerisation, die insbesondere auch im großtechnischen Maßstab durchgeführt werden können, ohne dass gleichzeitig Einschränkungen bei den gewünschten Produkteigenschaften hingenommen werden müssen.

Der Erfindung lag daher die Aufgabe zugrunde, die kontrollierte Herstellung von Polymerisaten aus Vinylmonomeren mit polaren Gruppen mittels anionischer Polymerisation auf wirtschaftliche Art und Weise verfügbar zu machen.

Demgemäß wurde ein Verfahren zur Herstellung von Polymerisaten aus Vinylmonomeren mit polaren Gruppen mittels anionischer Polymerisation gefunden, bei dem die anionische Polymerisation in Gegenwart eines Initiatorsystems durchgeführt wird, das
A)
   a1) mindestens einen Starter der allgemeinen Formel R^{A}-M¹ oder R^{B}-M²-R^{C}, worin R^{A}, R^{B} oder R^{C}, unabhängig voneinander, verzweigte oder geradkettige Alkylreste aus 1 bis 6 Kohlenstoffatomen, Arylreste aus 6 bis 20 Kohlenstoffatomen oder Alkylreste mit 1 bis 6 Kohlenstoffatomen, die mindestens einen Phenylrest tragen, darstellen und M¹ ein Metall, ausgewählt aus der Gruppe der Alkalimetalle, und M² ein Metall, ausgewählt aus der Gruppe der Erdalkalimetalle, bezeichnet, oder
   a2) als Starter "lebende" Polymerketten, deren Kettenenden gegebenenfalls durch sterisch anspruchsvolle und/oder aromatische Reste stabilisiert sind, und
B) mindestens ein Alkali- (I) oder Erdalkalimetallalkoholat (II) oder mindestens ein Alkali- (I) und mindestens ein Erdalkalimetallalkoholat (II), welche über mindestens einen Amino-oder Phosphinosubstituenten oder über mindestens einen Amino-und mindestens einen Phosphinosubstituenten verfügen,
enthält.

Außerdem wurde die Verwendung der nach dem erfindungsgemäßen Verfahren erhaltenen Polymerisate zur Herstellung von Formkörpern, Folien und Filmen sowie die hierbei erhältlichen Formkörper, Folien und Filme gefunden.

Bevorzugt werden in dem erfindungsgemäßen Verfahren Initiatorsysteme eingesetzt, die als Metallalkoholate (I) und (II) Verbindungen der allgemeinen Formeln (i) oder (ii)

(L)ₘT, (i)

R⁴X(R⁵-OZ¹)(R⁶-OZ²) (ii)

verwenden, wobei
L einen Rest [(R¹R²X)ₙ-R³-O-) darstellt, und
R¹ und R², jeweils unabhängig voneinander, sowie R⁴ Wasserstoff, substituierte oder unsubstituierte C₁- bis C₂₀-Alkyle in geradkettiger und verzweigter Form; substituierte oder unsubstituierte C₃- bis C₁₀-Cycloalkyle; substituierte oder unsubstituierte C₆-bis C₂₀-Aromaten; substituierte oder unsubstituierte Alkylaryle oder substituierte oder unsubstituierte Heteroaromaten bedeuten,
R³ geradkettige oder verzweigte, substituierte oder unsubstituierte C₁- bis C₂₀-Alkyleneinheiten, ggf. mit aromatischen oder heteroaromatischen Gliedern, die in die Alkylenkette eingebaut sind, oder substituierte oder unsubstituierte etherverbrückte Alkyleneinheiten -R⁷-O-R⁸- darstellt,
R⁵ und R⁶, jeweils unabhängig voneinander, geradkettige oder verzweigte, substituierte oder unsubstituierte C₁- bis C₂₀-Alkyle; substituierte oder unsubstituierte C₆- bis C₂₀-Aryle oder substituierte oder unsubstituierte Alkylaryle darstellen,
R⁷ und R⁸, jeweils unabhängig voneinander, substituierte oder unsubstituierte C₁- bis C₄-Alkylene darstellen.
n kann eine ganze Zahl zwischen 0 und der Anzahl der nicht-quaternären C-Atome von R³ sein. Mit n wird demnach die Anzahl der Lewis-basischen Amino- und Phosphinosubstituenten an R³ bezeichnet. Für Verbindungen, die unter die allgemeine Formel (i) fallen, ist X für n = 1 vorzugsweise N oder P. Für n ≠ 1 kann X in allen n (R¹R²X)-Substituenten entweder ausschließlich N oder ausschließlich P sein, X kann aber auch innerhalb einer Gruppe L für jeden einzelnen der n (R¹R²X)-Substituenten, unabhängig voneinander, jeweils N oder P bedeuten. Für Verbindungen, die unter die allgemeine Formel (ii) fallen, ist X entweder N oder P. Der Sauerstoffsubstituent wie auch die Lewis-basischen Gruppen in R¹ bis R⁶ können primäre, sekundäre, tertiäre oder aromatische Positionen einnehmen. T steht für ein Metallkation, ausgewählt aus der Gruppe der Alkalimetalle (m=1) oder der Erdalkalimetalle (m=2). Für m = 2 können die Reste L identisch oder verschieden sein. Vorzugsweise ist T ein Kation aus der Gruppe der Alkalimetalle, wobei bevorzugt auf Lithium zurückgegriffen wird. Z¹ und Z² stehen für Alkalimetallkationen, wobei Z¹ und Z² in einer Verbindung (ii) identische oder verschiedene Alkalimetallkationen bedeuten können.

Die in den beschriebenen Initiatorsystemen verwendeten Alkali- (I) und Erdalkalimetallalkoholate (II) sind an sich bekannt. Die einzusetzende Menge wird in der Regel in Abhängigkeit von der Startermenge bestimmt. Das molare Verhältnis von Metallalkoholat zu Starter liegt im Bereich von 0,2:1 bis 40:1. Bevorzugt wird jedoch ein Verhältnis im Bereich von 1:1 bis 15:1, besonders bevorzugt im Bereich von 3:1 bis 9:1 gewählt.

Als Alkali- und Erdalkalimetallalkoholate eignen sich insbesondere solche Verbindungen (i) oder (ii), bei denen
R¹ und R², jeweils unabhängig voneinander, sowie R⁴ als Alkylgruppe Methyl, Ethyl, i- oder n-Propyl oder i-, n- oder t-Butyl; als Cycloalkylgruppe Cyclopropyl, -pentyl oder -hexyl; als Alkylarylgruppe Benzyl; als aromatische Gruppe Phenyl, als heteroaromatische Gruppe Pyridyl bedeuten,
R³ eine Methylen-, Ethylen-, n- oder i-Propyleneinheit bedeutet,
R⁵ und R⁶, unabhängig voneinander, als Arylgruppe Phenyl; als Alkylarylgruppe Benzyl; als Alkylgruppe Ethyl-, i- oder n-Propyl-oder i-, n- oder t-Butyl darstellen und
R⁷ und R⁸ Methylen-, Ethylen-, n- oder i-Propyleneinheiten darstellen.

Die beschriebenen Reste R¹, R² und R⁴ können des weiteren, entweder einzeln oder zusammen, mindestens einen Lewis-basischen Amino-, Phosphino- oder Ethersubstituenten enthalten. D.h. R¹ oder R² oder R¹ und R², unabhängig voneinander, sowie R⁴ können mindestens einen Amino- oder Phosphino- oder Ethersubstituenten enthalten. Geeignet sind z.B. aliphatische oder aromatische Ether-oder Polyetherreste; vollständig substituierte aromatische oder aliphatische Aminogruppen, wie Diethyl- oder Diisopropylamino, sowie vollständig substituierte aromatische oder aliphatische Phosphinogruppen, wie Diethyl- oder Diisopropylphosphino.

Besonders bevorzugt sind ganz allgemein Alkali- und Erdalkalimetallalkoholate, die eine chelatisierende Konformation der intramolekularen Lewis-Base relativ zur Alkoholatfunktionalität ermöglichen.

Beispiele für verwendbare Alkalimetallalkoholate sind die Lithiumsalze von 2-Dimethylaminoethanol, 2-Diethylaminoethanol, 2-Diisopropylaminoethanol, 1-(Dimethylamino)-2-propanol, 2-Dibutylaminoethanol, 2,2'-(n-Butylimino)bisethanol, 1,1'-(Methylimino)bis-2-propanol, 2-[2-(Dimethylamino)ethoxy]-ethanol, 2-(Phenylamino)ethanol, 2-(Ethylphenylamino)ethanol, 2-[Ethyl-(3-methylphenyl)amino]ethanol, 3-(Ethylamino)-4-methylphenol, 3-Diethylaminophenol, 2,2'-(Phenylimino)bisethanol und 2,2'-[(3-Methylphenyl)imino]bisethanol. Bevorzugt wird auf die Lithiumsalze von 2-Dimethylaminoethanol, 2-Diethylaminoethanol, 2-Diisopropylaminoethanol, 2-Diethylaminoethanol, 2-Diisopropylaminoethanol, 1,1'-(Methylimino)bis-2-propanol und 2-[2-(Dimethylamino)ethoxy]ethanol zurückgegriffen. Besonders bevorzugt sind die Lithiumsalze von 2-Dimethylaminoethanol und 1,1' - (Methylimino)bis-2-propanol. Die Alkalimetallalkoholate können nach gängigen Verfahren durch Basenbehandlung aus den entsprechenden Aminoalkoholen erhalten werden. So wird beispielsweise 2-Dimethylaminolithiumethoxid durch Deprotonierung von 2-Dimethylaminoethanol bei 0°C mittels s-Butyllithium dargestellt.

Die unter die allgemeinen Formeln (i) und (ii) fallenden Metallalkoholate können auch als Mischung eingesetzt werden.

Starterverbindungen der allgemeinen Formel

R^{A}-M¹ bzw. R^{B}-M²-R^{C}

für die anionische Polymerisation sowie deren Herstellung sind bekannt. Dabei stellt M¹ ein Alkalimetall- und M² ein Erdalkalimetall-Kation dar. R^{A}, R^{B} und R^{C} können, unabhängig voneinander, verzweigte oder geradkettige Alkylreste aus 1 bis 6, bevorzugt 2 bis 6 Kohlenstoffatomen, Arylreste aus 6 bis 20 Kohlenstoffatomen oder Alkylreste mit 1 bis 6 Kohlenstoffatomen, die mindestens einen Phenylrest tragen, sein. Bevorzugt werden die Starterverbindungen R^{A}-M¹ eingesetzt, wobei M¹ insbesondere Lithium oder Natrium ist.

Als Starterverbindungen R^{A}-M¹ sind beispielsweise geeignet s-Butyllithium, n-Butyllithium, α-Methylstyrollithium, 1,1-Diphenylhexyllithium, Diphenylmethyllithium, -natrium, -kalium, 1,1-Diphenyl-3-methylpentyllithium oder Triphenylmethylkalium. Weiterhin können auch Lithium- und Natriumnaphthalid eingesetzt werden. Die Dosierung hängt ab von dem angestrebten Molekulargewicht des Polymeren, liegt aber in der Regel im Bereich von 0,002 bis 5 mol-%, bezogen auf die Monomerenmenge.

Des weiteren können als Starterverbindungen "lebende" Polymerketten, zum Beispiel des Polystyrols oder des Polybutadiens, eingesetzt werden. Bevorzugt sind solche "lebenden" Polymerketten, die über ein sterisch anspruchsvolles und/oder aromatisch stabilisiertes Kettenende verfügen. Hierunter fallen beispielsweise mittels anionischer Polymerisation erhältliche Polystyrol- oder Polybutadienketten, die mit 1,1'-Diphenylethen umgesetzt wurden. Somit sind unter den in Frage kommenden Initiatorsystemen auch solche zu verstehen, die mindestens einen Starter PS-D-M¹ oder PB-D-M¹ enthalten, worin PS-D- und PB-D- für "lebende" Polystyrol-bzw. Polybutadienketten mit einem durch Umsetzung mit 1,1'-Diphenylethen modifizierten Kettenende stehen, und M¹ ein Metall aus der Gruppe der Alkalimetalle, insbesondere Lithium, darstellt. Gleichfalls können anstelle von Polystyrol- oder Polybutadienketten auch entsprechende Blockcopolymere eingesetzt werden. Die Herstellung dieser Verbindungen ist Standardwissen des Polymerchemikers und z.B. beschrieben in P. Remp, P. Lutz; Makromol. Chem., Macromol. Symp. 67 (1993), S. 1-14. Unter Verwendung der genannten polymeren Starterverbindungen sind Blockcopolymere bestehend aus Polymerblöcken aus Vinylmonomeren mit polaren Gruppen, z.B. Polymethylmethacrylat und Polystyrol-, Polybutadien- oder Polystyrol/Polybutadienblockcopolymereinheiten zugänglich.

Die beschriebenen Initiatorsysteme können sowohl im Batch-Prozeß als auch in kontinuierlichen Verfahren eingesetzt werden. Bei der Herstellung von Polymerisaten aus Vinylmonomeren mit polaren Gruppen mittels anionischer Polymerisation können die Komponenten des Initiatorsystems entweder in separaten Lösungen - gleichzeitig oder nacheinander, wobei das Metallalkoholat regelmäßig vorgelegt wird, - oder als in einem inerten Lösungsmittel bzw. Lösungsmittelsystem hergestellte Mischung zur Monomerenlösung gegeben werden. Bevorzugt wird aber die Monomerenlösung zum Initiatorsystem gegeben. Insbesondere bei kontinuierlicher Verfahrensweise hat es sich als vorteilhaft erwiesen, Initiatorsystem und Vinylmonomere gleichzeitig bzw. nahezu gleichzeitig unter turbulenten Mischungsverhältnissen in das Reaktionsgefäß einzuführen. Je schneller und intensiver dabei die Durchmischung erfolgt, um so einheitlicher ist in der Regel das erhaltene Polymerprodukt.

Als Vinylmonomere mit polaren Gruppen kommen z.B. die Ester- und Amidderivate der Methacryl- und Acrylsäure in Betracht. Bevorzugt sind dabei die C₁-C₁₈-Ester der Acrylsäure und Methacrylsäure, wie Methyl-, Ethyl-, Propyl-, Butyl-, Hexyl-, 2-Ethylhexyl-, Lauryl- und Stearyl- in geradkettiger oder verzweigter Form, besonders bevorzugt sind n- und t-Butyl sowie 2-Ethylhexyl. Halogensubstituierte Estergruppen der Acryl- und Methacrylsäure, wie 2,2,2-Trifluorethyl-, sind gleichfalls einsetzbar. Ebenso können Methacryl- und Acrylnitril eingesetzt werden. Derartige Monomere sind an sich bekannt und kommerziell erhältlich.

Das erfindungsgemäße Verfahren wird bevorzugt in einem polaren aprotischen Lösungsmittel bzw. Lösungsmittelsystem durchgeführt. Dabei können entweder polare Lösungsmittel, wie Tetrahydrofuran, Dimethoxyethan, Triglyme, Dioxan, Hexamethylphosphorsäuretriamid, Trimethylamin oder Dimethylsulfoxid oder aber ein unpolares Lösungsmittel, wie Toluol oder Ethylbenzol, dem eines oder mehrere der vorgenannten polaren Lösungsmittel beigemengt sind, eingesetzt werden. Üblicherweise beträgt der Anteil an polaren Lösungsmitteln nicht mehr als 25 %. Bevorzugt ist ein Anteil kleiner 5 %. Es ist ebenfalls möglich, reines Toluol oder reines Ethylbenzol einzusetzen.

Die Polymerisation von Vinylmonomeren mit polaren Gruppen kann mit den beschriebenen Initiatorsystemen bei Temperaturen im Bereich von -100°C bis +100°C, bevorzugt von -50°C bis +50°C unter Ausschluß von Feuchtigkeit und Sauerstoff durchgeführt werden. Für die Polymerisation der beschriebenen Methacrylatmonomeren sind insbesondere Polymerisationstemperaturen von 0°C und darüber zu nennen.

Das erfindungsgemäße Verfahren zur anionischen Polymerisation von Vinylmonomeren mit polaren Gruppen wird bevorzugt in einem Rohrreaktor vorgenommen. Dazu werden die Monomerlösung sowie die Initiatorlösung in einer Mischdüse mit geringem Volumen unter turbulenten Strömungsverhältnissen gemischt und anschließend durch ein Rohr mit engem Querschnitt, das mit statischen Mischern (z.B. SMX-Mischer der Firma Sulzer) ausgerüstet sein kann, geleitet. Die Strömungsgeschwindigkeit sollte so hoch sein, daß eine relativ einheitliche Verweilzeit beobachtet wird. Die Zugabe eines Zweitmonomeren kann in einer weiteren, nachgeschalteten Mischdüse erfolgen. Das erfindungsgemäße Polymerisationsverfahren im Rohrreaktor wird üblicherweise kontinuierlich durchgeführt. Die Polymerisation wird durch Einmischen von H-aciden Verbindungen wie Methanol, Wasser oder Essigsäure oder von Gemischen der genannten Verbindungen abgebrochen. Anschließend kann die Polymerlösung zur weiteren Aufarbeitung in bekannter Weise in einem Verdampfer aufkonzentriert und einem Entgasungsextruder zugeführt werden.

Aus den nach den beschriebenen Verfahren erhältlichen Polymerisaten lassen sich z.B. durch Spritzguß oder Extrusion Formkörper herstellen. Die Polymerisate können ebenfalls zur Herstellung von Fasern sowie von Folien und Halbzeug im Tiefzieh-oder Blasverfahren verwendet werden.

Mit den hier beschriebenen Initiatorsystemen gelingt die anionische Polymerisation von Vinylmonomeren mit polaren Gruppen insbesondere bei kontinuierlicher Verfahrensführung auch in großtechnischem Maßstab. Indem die vorliegend beschriebenen Polymerisationen insbesondere für Polymethacrylate auch bei Temperaturen oberhalb von 0°C ein einheitliches Produkt mit guten Materialeigenschaften liefern, werden technisch aufwendige Kühlsysteme überflüssig, wodurch der Energieverbrauch gesenkt und die Wirtschaftlichkeit des erfindungsgemäßen Verfahrens gesteigert werden.

### Beispiele

Alle Arbeiten wurden unter Stickstoff mit getrockneten Chemikalien durchgeführt.

Der Gehalt an Restmonomer in der Reaktionsmischung wurde mittels Gaschromatographie (GC) an einem HP 5890 Gaschromatograph bestimmt. Dabei wurde eine Kapillarsäule, DB1 (30 m), unter den folgenden Bedingungen verwendet: Split 1:50; Einspritzblock 250°C; Detektor (FID) 250°C; Ofentemperatur 5 min bei 60°C, dann 15°C/min bis 250°C. Als interner Standard wurde Dioxan eingesetzt.

### Beispiel 1: Herstellung von 2-Dimethylaminolithiumethoxid

Zu 230ml Ethylbenzol wurden 10 ml (0,1 mol) 2-Dimethylaminoethanol und 1 Tropfen 1,1-Diphenylethen gegeben. Bei 0°C wurden langsan unter Rühren 70 ml einer 1,65 M s-Butyllithium-Lösung in Hexan/Cyclohexan zugegeben, bis eine rosa Färbung zu beobachten war.

### Beispiel 2: Herstellung der Initiatorlösung

300 ml der obigen 2-Dimethylaminolithiumethoxid-Lösung wurden zu 480 ml Ethylbenzol gegeben. Anschließend wurden 1,6 ml (9 mmol) 1,1-Diphenylethen und 20 ml Dimethoxyethan zugegeben. Danach wurden 5,1 ml einer 1,65 M s-Butyllithium-Lösung in Hexan/Cyclohexan (8,4 mmol) zugegeben.

### Beispiel 3: Polymerisation von Methylmethacrylat (Rohrreaktor-Verfahren)

400 ml der Initiatorlösung von Beispiel 2 wurden in einem Schlenkgefäß mit 300 ml Ethylbenzol verdünnt.

In einem zweiten Schlenkgefäß wurden 40 ml Methylmethacrylat (MMA) zu 660 ml Ethylbenzol gegeben. Die Initiatorlösung und Monomerlösung wurden bei Raumtemperatur über zwei getrennte (Zahnrad)Pumpen mit einem Fluß von 0,41 ml/sec bzw. 0,40 ml/sec einer Mischdüse zugeführt und anschließend durch ein 3 m langes Rohr mit 1,2 mm Innendurchmesser (mittlere Verweilzeit 4,2 sec) geleitet. Die Reaktion wurde durch Einleiten in Essigsäure abgebrochen. Der Umsatz betrug 100 %.

### Beispiel 4: Polymerisation von n-Butylacrylat (Rohrreaktor-Verfahren)

400 ml der Initiatorlösung von Beispiel 2 wurden in einem Schlenkgefäß mit 300 ml Ethylbenzol verdünnt.

In einem zweiten Schlenkgefäß wurden 40 ml n-Butylacrylat zu 660 ml Ethylbenzol gegeben. Die Initiatorlösung und Monomerlösung wurden bei Raumtemperatur über zwei getrennte (Zahnrad)Pumpen mit einem Fluß von 1,14 ml/sec bzw. 0,93 ml/sec einer Mischdüse zugeführt und anschließend durch ein 13 m langes Rohr mit 1,8 mm Innendurchmesser (mittlere Verweilzeit 16 sec) geleitet. Die Reaktion wurde durch Einleiten in Essigsäure abgebrochen. Der Umsatz betrug 30 %.

### Beispiel 5: Polymerisation von 2-Ethylhexylacrylat (EHA) (Batch-Verfahren)

Zu 20 ml Ethylbenzol und 5 ml Tetrahydrofuran wurden in einem 50 ml Rundkolben 0,27 ml 1,1-Diphenylethen gegeben. Nach Zugabe von 0,63 g 1-(Dimethylamino)-2-propanol wurde auf -50°C gekühlt und mit einer 1,3 M s-Butyllithium-Lösung (3,9 ml) in Cyclohexan bis zur schwachen Rotfärbung titriert. Es wurden weitere 0,77 ml der Butyllithium-Lösung sowie, unter starkem Rühren, 5 ml von über Aluminiumoxid getrocknetem EHA zugegeben. Die Temperatur stieg in wenigen Sekunden auf -27°C. Nach Abkühlen auf -50°C wurde durch Zugabe von 1 ml Methanol/Essigsäure (10/1) die Polymerisation abgebrochen. Gemäß GC-Analyse betrug der Umsatz 89 %.

### Beispiel 6: Polymerisation von 2-Ethylhexylacrylat (EHA) (Rohrreaktor-Verfahren)

Zu 3,2 g 1-(Dimethylamino)-2-propanol und einigen Tropfen 1,1-Diphenylethen wurde bei 0°C 1,3 M s-Butyllithium-Lösung (23,7 ml) in Cyclohexan zugegeben, bis eine dauerhafte Rotfärbung auftrat. Cyclohexan wurde im Vakuum entfernt, woraufhin mit 250 ml Tetrahydrofuran, 750 ml Ethylbenzol und 0,76 ml 1,1-Diphenylethen versetzt wurde. Durch Titration mit 0,16 ml 1,3 M s-Butyllithium-Lösung bis zum Rotumschlag und weiterer Zugabe von 5,3 ml 1,3 M s-Butyllithium-Lösung wurde die dunkelrote Initiatorlösung erhalten. Die Initiatorlösung (50 ml/min) und 250 ml EHA in 750 ml Ethylbenzol als Monomerlösung (17 ml/min) wurden getrennt über HPLC-Pumpen bei -50°C einer Mischdüse zugeführt und anschließend durch ein 10 m langes Rohr (1,17 mm Innendurchmesser, mittlere Verweilzeit 10 sec) geleitet. Die Polymerisation wurde durch Zudosierung von Methanol/Essigsäure abgebrochen. Gemäß GC-Analyse betrug der Umsatz 5 %.

### Beispiel 7: Polymerisation von 2-Ethylhexylacrylat (EHA) (BatchVerfahren)

Zu 20 ml Ethylbenzol und 5 ml Tetrahydrofuran wurden in einem 50 ml Rundkolben 0,27 ml 1,1-Diphenylethen und 0,47 g 1,1'-(Methylimino)bis-2-propanol gegeben und auf -50°C gekühlt. Nach Titration bis zur Rotfärbung mit 1,3 M s-Butyllithium-Lösung (4,2 ml) in Cyclohexan wurden weitere 0,77 ml an 1,3 M s-Butyllithium-Lösung sowie, unter starkem Rühren, 5 ml über Aluminiumoxid getrocknetes EHA zugegeben. Die Temperatur stieg in wenigen Sekunden auf -25°C. Nach Abkühlen auf -50°C wurde die Polymerisation durch die Zugabe von 1 ml Methanol/Essigsäure (10/1) abgebrochen. Gemäß GC-Analyse betrug der Umsatz 97 %.

### Beispiel 8: Polymerisation von 2-Ethylhexylacrylat (EHA) (Rohrreaktor-Verfahren)

Zu 2,3 g 1,1'-(Methylimino)bis-2-propanol und einigen Tropfen 1,1-Diphenylethen wurde bei 0°C 1,3 M s-Butyllithium-Lösung (24 ml) in Cyclohexan zugegeben, bis eine dauerhafte Rotfärbung auftrat. Cyclohexan wurde im Vakuum entfernt, woraufhin mit 250 ml Tetrahydrofuran, 750 ml Ethylbenzol und 0,76 ml 1,1-Diphenylethen versetzt wurde. Durch Titration mit 0,14 ml 1,3 M s-Butyllithium-Lösung bis zum Rotumschlag und weiterer Zugabe von 5,3 ml 1,3 M s-Butyllithium-Lösung wurde die dunkelrote Initiatorlösung erhalten. Die Initiatorlösung (50 ml/min) und 250 ml EHA in 750 ml Ethylbenzol als Monomerlösung (17 ml/min) wurden getrennt über HPLC-Pumpen bei -50°C einer Mischdüse zugeführt und anschließend durch ein 10 m langes Rohr (1,17 mm Innendurchmesser; mittlere Verweilzeit 10 sec) geleitet. Die Polymerisation wurde durch Zudosierung einer Methanol/Essigsäuremischung abgebrochen. Gemäß GC-Analyse betrug der Umsatz 16 %.

## Patentansprüche

1. Verfahren zur Herstellung von Polymerisaten aus Vinylmonomeren mit polaren Gruppen mittels anionischer Polymerisation, **dadurch gekennzeichnet**, daß die anionische Polymerisation in Gegenwart eines Initiatorsystems durchgeführt wird, das
A)
a1) mindestens einen Starter der allgemeinen Formel R^{A}-M¹ oder R^{B}-M²-R^{C}, worin R^{A}, R^{B} oder R^{C}, unabhängig voneinander, verzweigte oder geradkettige Alkylreste aus 1 bis 6 Kohlenstoffatomen, Arylreste aus 6 bis 20 Kohlenstoffatomen oder Alkylreste mit 1 bis 6 Kohlenstoffatomen, die mindestens einen Phenylrest tragen, darstellen und M¹ ein Metall, ausgewählt aus der Gruppe der Alkalimetalle, und M² ein Metall, ausgewählt aus der Gruppe der Erdalkalimetalle, bezeichnet, oder
a2) als Starter "lebende" Polymerketten, deren Kettenenden gegebenenfalls durch sterisch anspruchsvolle und/oder aromatische Reste stabilisiert sind, und
B) mindestens ein Alkali- (I) oder Erdalkalimetallalkoholat (II) oder mindestens ein Alkali- (I) und mindestens ein Erdalkalimetallalkoholat (II), welche über mindestens einen Amino- oder Phosphinosubstituenten oder über mindestens einen Amino- und mindestens einen Phosphinosubstituenten verfügen,
enthält.

2. Verfahren nach Anspruch 1, **dadurch gekennzeichnet**, daß die Polymerisation in einem Rohrreaktor durchgeführt wird.

3. Verfahren nach den Ansprüchen 1 bis 2, **dadurch gekennzeichnet**, daß es kontinuierlich durchgeführt wird.

4. Verwendung der gemäß den Ansprüchen 1 bis 3 erhaltenen Polymerisate zur Herstellung von Formkörpern, Folien und Fasern.

5. Formkörper, Folien und Fasern, erhältlich aus den nach dem Verfahren gemäß den Ansprüchen 1 bis 3 hergestellten Polymerisaten.

## Claims

1. A process for preparing polymers from vinyl monomers having polar groups by means of anionic polymerization, which comprises conducting the anionic polymerization in the presence of an initiator system which comprises
A)
a1) at least one initiator of the formula R^{A}-M¹ or R^{B}-M²-R^{C}, where R^{A}, R^{B} and R^{C} independently are branched or straight-chain alkyls of 1 to 6 carbons, aryls of 6 to 20 carbons or alkyls which have 1 to 6 carbons and carry at least one phenyl, and M¹ is an alkali metal and M² is an alkaline earth metal, or
a2) as initiators, "living" polymer chains whose ends may have been stabilized using sterically bulky and/or aromatic radicals, and
B) at least one alkali metal alcoholate (I) or alkaline earth metal alcoholate (II) or at least one alkali metal alcoholate (I) and at least one alkaline earth metal alcoholate (II), which have at least one amino or phosphino substituent or at least one amino substituent and at least one phosphino substituent.

2. A process as claimed in claim 1, wherein the polymerization is carried out in a tube reactor.

3. A process as claimed in claim 1 or 2, which is conducted continuously.

4. The use of a polymer obtained as set forth in any of claims 1 to 3 for producing moldings, films or fibers.

5. A molding, film or fiber obtainable from a polymer prepared by the process as claimed in any of claims 1 to 3.

## Revendications

1. Procédé pour la préparation de polymères à partir de monomères vinyliques contenant des groupes polaires à l'aide d'une polymérisation anionique, **caractérisé en ce qu**'on effectue la polymérisation anionique en présence d'un système d'initiateurs qui contient
A)
a1) au moins un agent d'amorçage répondant à la formule générale R^{A}-M¹ ou R^{B}-M²-R^{C}, dans lesquelles R^{A}, R^{B} ou R^{C} représentent, indépendamment les uns des autres, des radicaux alkyle à chaîne droite ou ramifiée contenant de 1 à 6 atomes de carbone, des radicaux aryle contenant de 6 à 20 atomes de carbone ou des radicaux alkyle contenant de 1 à 6 atomes de carbone, qui portent au moins un radical phényle, et M¹ représente un métal choisi parmi le groupe des métaux alcalins et M² représente un métal choisi parmi le groupe des métaux alcalino-terreux, ou bien
a2) à titre d'agent d'amorçage, des chaînes polymères "vivantes" dont les extrémités de chaînes ont été le cas échéant stabilisées par des radicaux encombrants du point de vue stérique et/ou aromatiques, et
B) au moins un alcoolate de métal alcalin (I) ou de métal alcalino-terreux (II) ou au moins un alcoolate de métal alcalin (I) et au moins un alcoolate de métal alcalino-terreux (II), qui disposent d'au moins un substituant amino ou phosphino ou d'au moins un substituant amino et d'au moins un substituant phosphino.

2. Procédé selon la revendication 1, **caractérisé en ce qu**'on effectue la polymérisation dans un réacteur tubulaire.

3. Procédé selon les revendications 1 à 2, **caractérisé en ce qu**'on l'effectue en continu.

4. Utilisation des polymères obtenus conformément aux revendications 1 à 3, pour la fabrication de corps moulés, de feuilles et de fibres.

5. Corps moulés, feuilles et fibres que l'on obtient à partir des polymères préparés conformément au procédé selon les revendications 1 à 3.
